# EUROPEAN PATENT APPLICATION

(11) **EP 3 668 224 A1**
(43) Date of publication of application: **17.06.2020**
(21) Application number: 18844620.7
(22) Date of filing: 24.07.2018
(51) Int. Cl.: H04W 72/04

(54) **UPLINK INFORMATION TRANSMISSION METHOD, DEVICE AND SYSTEM, AND STORAGE MEDIUM**

(30) Priority: 08.08.2017 CN 201710672149
(71) Applicant: ZTE Corporation, Shenzhen, Guangdong 518057 (CN)
(72) Inventor: FEI, Peiyan, Shenzhen Guangdong 518057 (CN); LI, Qun, Shenzhen Guangdong 518057 (CN)
(74) Representative: J A Kemp LLP
(86) International application number: PCT/CN2018/096861
(87) International publication number: WO 2019/029355

(57) **Abstract**

Provided are a method, an apparatus and a system for transmitting uplink information, and a storage medium. The method includes: determining an uplink transmitting antenna for transmitting first uplink information and second uplink information on a same subframe, where the first uplink information includes an uplink sounding reference signal, and the second uplink information includes at least one of: an uplink traffic channel signal or an uplink control channel signal; and transmitting the first uplink information and the second uplink information through the determined uplink transmitting antenna.

## Description

### CROSS-REFERENCES TO RELATED APPLICATIONS

This application claims priority to a Chinese patent application No. 201710672149.8 filed on August 8, 2017, disclosure of which is incorporated herein by reference in its entirety.

### TECHNICAL FIELD

The present application relates to the field of telecommunications and, in particular, to a method, an apparatus and a system for transmitting uplink information, and a storage medium.

### BACKGROUND

A multi-antenna wireless transmission technology is the key of a 4G system and is also one of the key technologies in 5G The multi-antenna wireless transmission technology is a very effective means to solve the problem of throughput. The application of the multi-antenna wireless transmission technology can improve a space resource utilization rate, spectrum efficiency, customer experience and system capacity.

Among uplink multi-antenna wireless transmission technologies, an antenna in-turn transmitting technology, as an important technology to improve uplink and downlink performance, has received more and more attention in the existing LTE communication field. An antenna in-turn transmitting manner for an uplink traffic channel and an antenna in-turn transmitting method for an uplink sounding reference signal (SRS) have been clearly specified in the existing art. However, for a same subframe, related transmission methods have the probabilistic problem of inconsistent uplink transmitting antennas of the SRS, the uplink traffic channel and/or an uplink control channel, which increases terminal costs, increases wireless link demodulation complexity, and cannot ensure real-time link processing.

No effective solution has yet been proposed for the above-mentioned problem in the related art.

### SUMMARY

Embodiments of the present application provide a method, apparatus and system for transmitting uplink information, and a storage medium, to solve at least the problem in the related art of inconsistent uplink transmitting antennas of the uplink information for a same subframe.

An embodiment of the present application provides a first method for transmitting uplink information. The method includes: determining an uplink transmitting antenna for transmitting first uplink information and second uplink information on a same subframe, where the first uplink information includes an SRS, and the second uplink information includes at least one of: an uplink traffic channel signal or an uplink control channel signal; and transmitting the first uplink information and the second uplink information through the determined uplink transmitting antenna.

Another embodiment of the present application further provides a second method for transmitting uplink information. The method includes: determining an uplink transmitting antenna for a user equipment (UE) to transmit first uplink information and second uplink information on a same subframe, and indicating the determined uplink transmitting antenna to the UE; or delivering reference information to the UE through multiple antennas, where the reference information is used by the UE to select from the multiple antennas the uplink transmitting antenna for transmitting the first uplink information and the second uplink information. The first uplink information includes an SRS, and the second uplink information includes at least one of: an uplink traffic channel signal or an uplink control channel signal.

An embodiment of the present application provides a first apparatus for transmitting uplink information. The apparatus includes a first determining module and a transmitting module. The first determining module is configured to determine an uplink transmitting antenna for transmitting first uplink information and second uplink information on a same subframe, where the first uplink information includes an SRS, and the second uplink information includes at least one of: an uplink traffic channel signal or an uplink control channel signal. The transmitting module is configured to transmit the first uplink information and the second uplink information through the determined uplink transmitting antenna.

An embodiment of the present application further provides a second apparatus for transmitting uplink information. The apparatus includes a second determining module or a delivering module. The second determining module is configured to determine an uplink transmitting antenna for a user equipment (UE) to transmit first uplink information and second uplink information on a same subframe, and indicate the determined uplink transmitting antenna to the UE. Alternatively, the delivering module is configured to deliver reference information to the UE through multiple antennas, where the reference information is used by the UE to select from the multiple antennas the uplink transmitting antenna for transmitting the first uplink information and the second uplink information. The first uplink information includes an SRS, and the second uplink information includes at least one of: an uplink traffic channel signal or an uplink control channel signal.

An embodiment of the present application provides a system for transmitting uplink information. The system includes a user equipment (UE) and a wireless access system device. The UE includes a first processor which is configured to perform the first method for transmitting uplink information according to any one of the embodiments described above. The wireless access system device includes a second processor which is configured to perform the second method for transmitting uplink information according to any one of the embodiments described above.

An embodiment of the present application provides a storage medium. The storage medium includes stored programs, where the programs, when executed, perform the method according to any one of the embodiments described above.

According to the present application, the determined uplink transmitting antenna may be used for transmitting the first uplink information and the second uplink information, ensuring consistency of the uplink transmitting antennas of the above-mentioned information for the same subframe. Therefore, the present application can solve the problem in the related art of increased terminal costs, high wireless link demodulation complexity, and an inability to ensure real-time link processing due to the inconsistent uplink transmitting antennas of the uplink information for the same subframe, and achieve the effects of avoiding the increase of terminal costs, reducing the wireless link demodulation complexity, and ensuring the real-time link processing.

### BRIEF DESCRIPTION OF DRAWINGS

The drawings described herein are used to provide a further understanding of the present application and form a part of the present application. The exemplary embodiments and descriptions thereof in the present application are used to explain the present application and not to limit the present application in any improper way. In the drawings:
FIG. 1 is a block diagram of hardware of a mobile terminal for a method for transmitting uplink information according to an embodiment of the present application;
FIG. 2 is a flowchart of a first method for transmitting uplink information according to an embodiment of the present application;
FIG. 3 is a flowchart of a second method for transmitting uplink information according to an embodiment of the present application;
FIG. 4 is a diagram of a hardware environment according to an embodiment of the present application;
FIG. 5 is a flowchart of a closed-loop antenna in-turn transmitting technology according to an embodiment of the present application;
FIG. 6 is a flowchart of an open-loop antenna in-turn transmitting technology according to an embodiment of the present application;
FIG. 7 is a block diagram of a first apparatus for transmitting uplink information according to an embodiment of the present application; and
FIG. 8 is a block diagram of a second apparatus for transmitting uplink information according to an embodiment of the present application.

### DETAILED DESCRIPTION

The present application will be described hereinafter in detail with reference to the drawings and in conjunction with embodiments. It is to be noted that if not in collision, the embodiments and features therein in the present application may be combined with each other.

It is to be noted that the terms "first", "second" and the like in the description, claims and drawings of the present application are used to distinguish between similar objects and are not necessarily used to describe a particular order or sequence.

Due to the problem in the related art of inconsistent uplink transmitting antennas of uplink information for a same subframe, a new technology needs to be found to solve the problem that multiple pieces of information are transmitted through inconsistent uplink transmitting antennas on the same subframe without affecting the improvement of uplink and downlink performance, to reduce uplink transmitting complexity of a terminal's information, and to improve the feasibility of the terminal to implement an antenna in-turn transmitting technology. How to implement consistent uplink transmitting antennas is described below.

### Embodiment 1

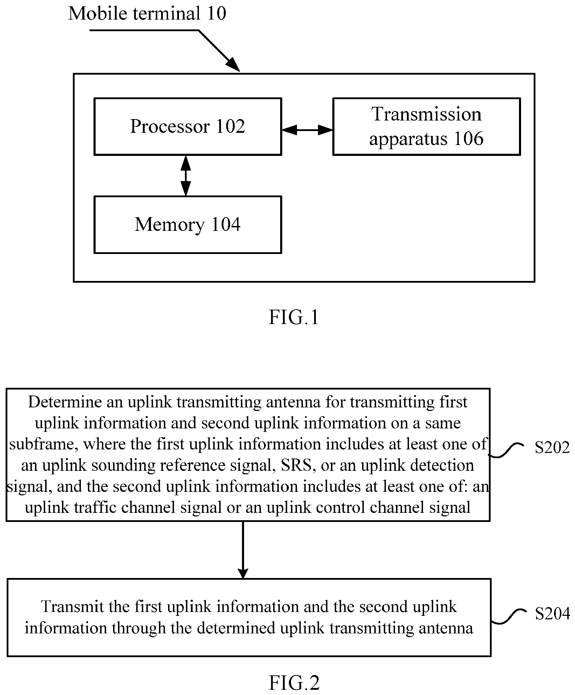

A method embodiment provided by embodiment 1 of the present application may be executed in a mobile terminal, a computer terminal or other similar computing apparatuses. Taking the method embodiment to be executed in the mobile terminal as an example, FIG. 1 is a block diagram of hardware of a mobile terminal for a method for transmitting uplink information according to an embodiment of the present application. As shown in FIG. 1, a mobile terminal 10 may include one or more (only one is shown in FIG. 1) processors 102 (the processor 102 may include, but is not limited to, a processing apparatus such as a microcontroller unit (MCU) and a field programmable gate array (FPGA)), a memory 104 used for storing data, and a transmission apparatus 106 used for implementing a communication function. It may be understood by those skilled in the art that the structure shown in FIG. 1 is only illustrative, and not intended to limit the structure of the electronic apparatus described above. For example, the mobile terminal 10 may further include more or fewer components than the components shown in FIG. 1, or may have a configuration different from the configuration shown in FIG. 1.

The memory 104 may be used for storing software programs and modules of application software, such as program instructions/modules corresponding to the method for transmitting uplink information in the embodiments of the present application. The processor 102 executes the software programs and modules stored in the memory 104 so as to perform various function applications and data processing, that is, to implement the method described above. The memory 104 may include a high-speed random access memory, or may further include a nonvolatile memory such as one or more magnetic storage apparatuses, flash memories or other nonvolatile solid-state memories. In some examples, the memory 104 may further include memories that are remotely disposed with respect to the processor 102. These remote memories may be connected to the mobile terminal 10 via a network. Examples of the above network include, but are not limited to, the Internet, an intranet, a local area network, a mobile communication network and a combination thereof.

The transmission apparatus 106 is configured to receive or transmit data via a network. Specific examples of the above network may include a wireless network provided by a communication provider of the mobile terminal 10. In one example, the transmission apparatus 106 includes a network interface controller (NIC), which may be connected to other network devices via a base station, thereby communicating with the Internet. In one example, the transmission apparatus 106 may be a radio frequency (RF) module, which is configured to communicate with the Internet in a wireless way.

The embodiment provides a method for transmitting uplink information, which is executed in the mobile terminal described above. FIG. 2 is a flowchart of a first method for transmitting uplink information according to an embodiment of the present application. As shown in FIG. 2, the method includes steps described below.

In step S202, an uplink transmitting antenna is determined for transmitting first uplink information and second uplink information on a same subframe, where the first uplink information includes an SRS, and the second uplink information includes at least one of: an uplink traffic channel signal or an uplink control channel signal.

In step S204, the first uplink information and the second uplink information are transmitted through the determined uplink transmitting antenna.

The operations described above may be performed by a user equipment (UE). The determined uplink transmitting antenna may be used for transmitting the first uplink information and the second uplink information, that is to say, the first uplink information and the second uplink information are transmitted through a same uplink transmitting antenna.

According to the above embodiment, the determined uplink transmitting antenna may be used for transmitting the first uplink information and the second uplink information, ensuring consistency of the uplink transmitting antennas of the above-mentioned information for the same subframe. Therefore, the method can solve the problem in the related art of increased terminal costs, high wireless link demodulation complexity, and an inability to ensure real-time link processing due to inconsistent uplink transmitting antennas of the uplink information for the same subframe, and achieve the effects of avoiding the increase of terminal costs, reducing the wireless link demodulation complexity, and ensuring the real-time link processing.

In an optional embodiment, the step of determining the uplink transmitting antenna for transmitting the first uplink information and the second uplink information on the same subframe includes steps described below. The first uplink information is transmitted in turn through multiple antennas to a wireless access system device. A first indication message is received from the wireless access system device, where the first indication message is used for indicating from the multiple antennas an antenna for transmitting the second uplink information, and the indicated antenna is determined by the wireless access system device according to the first uplink information which is transmitted in turn through the multiple antennas. The antenna indicated by the first indication message is determined to be the uplink transmitting antenna. In the embodiment, a closed-loop antenna selection manner may be used, that is, a wireless access device selects the uplink transmitting antenna for transmitting the uplink information. After the uplink transmitting antenna is selected, the UE is notified. The wireless access system device is a device for receiving the uplink information, and may be, but is not limited to, a base station.

In an optional embodiment, the step of receiving the first indication message from the wireless access system device includes receiving the first indication message notified by the wireless access system device through downlink control information (DCI). That is to say, the wireless access system device may notify the UE of the specific uplink transmitting antenna through the DCI. Of course, the wireless access system device may also notify the UE in other manners.

In an optional embodiment, after the first uplink information is transmitted in turn through the multiple antennas to the wireless access system device, the method further includes receiving a second indication message from the wireless access system device, and terminating, according to the second indication message, transmitting the first uplink information in turn through the multiple antennas to the wireless access system device. In the embodiment, when determining on the same subframe that a signal received through a certain antenna is always higher than those received through other antennas, the wireless access system device may notify the UE to enter a state of being disabled from multi-antenna in-turn transmitting. Optionally, the wireless access system device may notify the UE through higher-layer configuration information that antenna in-turn transmitting is disabled. The in-turn transmitting of the first uplink information is terminated, and antenna selection and transmitting functions corresponding to the second uplink information are terminated.

In an optional embodiment, the step of determining the uplink transmitting antenna for transmitting the first uplink information and the second uplink information on the same subframe includes receiving reference information from the wireless access system device through the multiple antennas, and determining, according to the reference information, the uplink transmitting antenna from the multiple antennas. In the embodiment, an open-loop antenna selection manner is used, and mainly the UE autonomously selects the antenna.

In an optional embodiment, the reference information includes at least one of reference signal information or traffic channel information. It is to be noted that the above-mentioned reference information is only several preferred embodiments, and in practical applications, other reference information may also be used.

In an optional embodiment, the step of determining, according to the reference information, the uplink transmitting antenna from the multiple antennas includes selecting, according to reception qualities of the reference information received through the multiple antennas, the uplink transmitting antenna from the multiple antennas.

In an optional embodiment, after the reference information is received from the wireless access system device through the multiple antennas, the method further includes in response to determining that a reception quality of the reference information received through a first antenna among the multiple antennas is higher than reception qualities of the reference information received through other antennas among the multiple antennas, terminating a process of selecting the uplink transmitting antenna from the multiple antennas, and determining the first antenna to be the uplink transmitting antenna. That is to say, in the embodiment, when a quality of a signal received by the UE through a certain antenna is always higher than those of the signal received by the UE through other antennas, the UE terminates a measurement for antenna selection for the first uplink information and the second uplink information, and all the uplink information is only transmitted through an antenna with the highest received signal strength.

In an optional embodiment, after the process of selecting the uplink transmitting antenna from the multiple antennas is terminated, the method further includes: in response to determining that a reception quality of reference information received through a second antenna among the multiple antennas is higher than the reception quality of the reference information received through the first antenna among the multiple antennas, restarting the process of selecting the uplink transmitting antenna from the multiple antennas. In the embodiment, after the UE terminates the antenna in-turn transmitting, the UE will periodically detect or be triggered by an event to detect signal qualities of the antennas, and when detecting that a signal quality of a current selected antenna is inferior to signal qualities of other antennas, the UE starts measuring downlink reference information for the antenna in-turn transmitting and enters an antenna in-turn transmitting mode.

In an optional embodiment, the reception quality includes at least one of a received signal strength, a signal-to-noise ratio or a path loss.

In an optional embodiment, the wireless access system device and the UE may negotiate a transmitting principle for the uplink information, and the uplink information, when being transmitted, may be transmitted according to the negotiated principle. Optionally, the step of transmitting the first uplink information and the second uplink information through the determined uplink transmitting antenna includes transmitting the first uplink information and the second uplink information according to the transmitting principle pre-negotiated with the wireless access system device. The transmitting principle includes one of: in response to determining that the first uplink information and the second uplink information use a same uplink transmitting antenna on the same subframe, transmitting the first uplink information and the second uplink information on the same subframe; or in response to determining that the first uplink information and the second uplink information use different uplink transmitting antennas on the same subframe, performing one of the following transmitting manners: using the uplink transmitting antenna of the second uplink information as the uplink transmitting antenna of the first uplink information, using the uplink transmitting antenna of the first uplink information as the uplink transmitting antenna of the second uplink information, abandoning transmitting the first uplink information on the subframe, or abandoning transmitting the second uplink information on the subframe.

### Embodiment 2

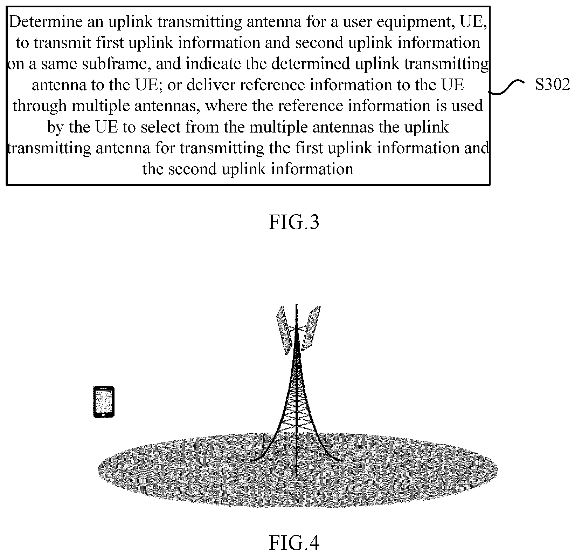

An embodiment further provides a method for transmitting uplink information. FIG. 3 is a flowchart of a second method for transmitting uplink information according to the embodiment of the present application. As shown in FIG. 3, the method includes a step described below.

In step S302, an uplink transmitting antenna is determined for a user equipment (UE) to transmit first uplink information and second uplink information on a same subframe, and the determined uplink transmitting antenna is indicated to the UE; or reference information is delivered to the UE through multiple antennas, where the reference information is used by the UE to select from the multiple antennas the uplink transmitting antenna for transmitting the first uplink information and the second uplink information.

The first uplink information includes an SRS, and the second uplink information includes at least one of: an uplink traffic channel signal or an uplink control channel signal.

The operations described above may be performed by a wireless access system device (for example, a base station). The present application is described below by using the wireless access system device as an example. The determined uplink transmitting antenna may be used for transmitting the first uplink information and the second uplink information.

According to the above embodiment, the determined uplink transmitting antenna may be used for transmitting the first uplink information and the second uplink information, ensuring consistency of the uplink transmitting antennas of the above-mentioned information for the same subframe. Therefore, the method can solve the problem in the related art of increased terminal costs, high wireless link demodulation complexity, and an inability to ensure real-time link processing due to inconsistent uplink transmitting antennas of the uplink information for the same subframe, and achieve the effects of avoiding the increase of terminal costs, reducing the wireless link demodulation complexity, and ensuring the real-time link processing.

In an optional embodiment, the step of determining the uplink transmitting antenna for the UE to transmit the first uplink information and the second uplink information on the same subframe includes receiving the first uplink information transmitted by the UE in turn through the multiple antennas, determining, according to the received first uplink information, an antenna for the UE to transmit the second uplink information from the multiple antennas, and determining the antenna for the UE to transmit the second uplink information to be the uplink transmitting antenna. In the embodiment, a closed-loop antenna selection manner may be used, that is, a wireless access device selects the uplink transmitting antenna for transmitting the uplink information. After the uplink transmitting antenna is selected, the UE is notified.

In an optional embodiment, the step of determining, according to the received first uplink information, the antenna for the UE to transmit the second uplink information from the multiple antennas includes determining from the multiple antennas an antenna, through which the first uplink information transmitted by the UE has a highest signal strength, to be the antenna for transmitting the second uplink information. That is to say, the wireless access system device determines strength of a signal transmitted by the UE through different antennas, and selects an antenna with the highest signal strength as the uplink transmitting antenna.

In an optional embodiment, the step of indicating the determined uplink transmitting antenna to the UE includes: transmitting a first indication message to the UE through downlink control information (DCI). The first indication message is used for indicating the uplink transmitting antenna. That is to say, the wireless access system device may notify the UE of the specific uplink transmitting antenna through the DCI. Of course, the wireless access system device may also notify the UE in other manners.

In an optional embodiment, after the step of receiving the first uplink information transmitted by the UE in turn through the multiple antennas, the method further includes: in response to determining that a reception quality of the first uplink information received through a third antenna among the multiple antennas is higher than reception qualities of the first uplink information received through other antennas among the multiple antennas, transmitting a second indication message to the UE. The second indication message is used for instructing the UE to terminate transmitting the first uplink information in turn through the multiple antennas to the wireless access system device. In the embodiment, when determining on the same subframe that a signal received through a certain antenna is always higher than those received through other antennas, the wireless access system device may notify the UE to enter a state of being disabled from multi-antenna in-turn transmitting. Optionally, the wireless access system device may notify the UE through higher-layer configuration information that antenna in-turn transmitting is disabled. The in-turn transmitting of the first uplink information is terminated, and antenna selection and transmitting functions corresponding to the second uplink information are terminated.

In an optional embodiment, the reference information includes at least one of reference signal information or traffic channel information.

In an optional embodiment, the method further includes pre-negotiating a transmitting principle for transmitting the uplink information with the UE. The transmitting principle includes one of: in response to determining that the first uplink information and the second uplink information use a same uplink transmitting antenna on the same subframe, transmitting the first uplink information and the second uplink information on the same subframe; or in response to determining that the first uplink information and the second uplink information use different uplink transmitting antennas on the same subframe, performing one of the following transmitting manners: using the uplink transmitting antenna of the second uplink information as the uplink transmitting antenna of the first uplink information, using the uplink transmitting antenna of the first uplink information as the uplink transmitting antenna of the second uplink information, abandoning transmitting the first uplink information on the subframe, or abandoning transmitting the second uplink information on the subframe.

To sum up, in the present application, two schemes for selecting the uplink transmitting antenna are mainly used. In a first scheme, the wireless access system device configures by a higher layer through radio resource control (RRC) that uplink antenna in-turn transmitting is enabled and a capability to control closed-loop antenna selection is enabled and notifies the UE of a message about this. When the antenna selection is performed for uplink transmitting, the wireless access system device (for example, the base station) determines and selects an uplink antenna position for the uplink transmitting and notifies the UE that the UE performs the determination of the wireless access system device. In a second scheme, the UE receives the message that the higher layer configures that the uplink antenna in-turn transmitting is enabled and a capability to control open-loop antenna selection is enabled. When an antenna position of an uplink wireless link is selected, the UE autonomously selects the antenna.

The first scheme is a closed-loop method, and the uplink transmitting antenna of the UE is provided by the wireless access system device. The second scheme is an open-loop method, and the UE autonomously selects the antenna. Compared with the closed-loop method, the open-loop method in which the UE selects the uplink transmitting antenna has greater flexibility. The two schemes separately provide solutions to the problem of inconsistent uplink transmitting antennas of the uplink information on the same subframe, and can both reduce costs for implementing the antenna in-turn transmitting technology of the terminal. Meanwhile, the uplink transmitting antennas on the same subframe are limited to the same antenna, thereby reducing processing costs for the base station to receive data.

The present application is described below in conjunction with specific embodiments. (In the following embodiments, the base station is used as an example of the wireless access system device for description, and the uplink traffic channel signal/the uplink control channel signal appears as a whole and means the uplink traffic channel signal and/or the uplink control channel signal).

### Specific embodiment 1

An application premise of this scheme is that a higher layer configures that an uplink antenna in-turn transmitting switch is enabled and a closed-loop antenna selection switch is enabled, and information about this is transmitted to a UE. When an uplink antenna is selected, a base station determines the uplink antenna for uplink transmitting, and the UE performs the base station's determination.

It is assumed here that the UE has two antennas.
1. After receiving a closed-loop antenna transmitting instruction, the UE performs uplink transmitting of an SRS in a manner specified in the 36.213 protocol.
2. The base station receives SRS information transmitted by the UE. The UE transmits the SRS information in the uplink at different time points through antenna0 and antenna1. After receiving the SRS information, the base station determines strength of a signal transmitted in the uplink through two antennas within a time window T0.
   Assuming that the signal is received N times through antenna0 and is received M times through antenna1 within the time window T0, the base station averages the strength of the signal received N times through antenna0 to obtain SRS received power 0 (SRSRP0), averages the strength of the signal received M times through antenna1 to obtain SRSRP1, and determines sizes of SRSRP0 and SRSRP1, where an antenna with a larger value is an antenna with higher signal strength.
   T0 is an integer greater than 0. The base station selects the antenna with the higher signal strength and notifies the UE of the corresponding information about a data transmitting antenna. For example, the base station may notify the UE of information about the uplink transmitting antenna by an antenna selection information field in DCI. Assuming that a length of the antenna selection field is 1 bit, 0 means antenna0, and 1 means antenna1.
3. If the SRS and an uplink traffic channel signal/an uplink control channel signal (that is, the uplink traffic channel signal and/or the uplink control channel signal) use a same uplink transmitting antenna on a same subframe, the SRS and the uplink traffic channel signal/the uplink control channel signal are transmitted on the same sub-frame.
4. If the SRS and the uplink traffic channel signal/the uplink control channel signal use different uplink transmitting antennas on the same subframe, the uplink transmitting antenna of the SRS is used as the uplink transmitting antenna of the uplink traffic channel signal/the uplink control channel signal, or the SRS is transmitted through the uplink transmitting antenna of the uplink traffic channel signal/the uplink control channel signal, or the UE abandons transmitting the SRS on the subframe, or the UE abandons transmitting the uplink traffic channel signal/the uplink control channel signal on the subframe.
   Different implementation scenarios of different options are described below.
   The uplink transmitting of the uplink traffic channel signal or the uplink control channel signal is performed by using the uplink transmitting antenna of the SRS. This method may be used when downlink traffic uses a beamforming (BF) transmission technology.
   The uplink transmitting antenna of the uplink traffic channel signal/the uplink control channel signal is used as the uplink transmitting antenna of the SRS for the uplink transmitting of the SRS. This method may be used when the downlink traffic does not use the beamforming (BF) transmission technology.
   The UE abandons transmitting the SRS on the subframe and only transmits the uplink traffic channel signal or the uplink control channel signal. This method is used when the downlink traffic does not use the beamforming (BF) transmission technology, or when the uplink traffic channel signal is guaranteed bit rate (GBR) traffic, or when the uplink control channel signal is periodic report information.
   The UE abandons transmitting the uplink traffic channel signal/the uplink control channel signal on the subframe and only transmits the SRS. This method is used when the downlink traffic uses the BF transmission technology, or when uplink traffic is non-guaranteed bit rate (NGBR) traffic, or when the uplink control channel signal is aperiodically reported.
5. If the signal received by the base station through one antenna is always lower than the signal received through the other antenna within time T1, where T1 is greater than 0, the base station notifies the higher layer of the information. The higher layer reconfigures signaling to notify the UE that the antenna in-turn transmitting is disabled. The in-turn transmitting of the SRS is terminated, and antenna selection and transmitting functions corresponding to the uplink traffic channel signal/the uplink control channel signal are terminated.

For example, the base station acquires the signal strength of antenna0 and antenna1 within the time T1, and continuously compares the strength SRSRP0i and SRSRPli of the two antennas, where i is an integer greater than or equal to 0. When a probability for SRSRP0 being greater than SRSRP1 is greater than 95% (the probability may be flexibly set according to practical application scenarios, for example, it may also be set that the probability is greater than 90%), it may be considered that SRSRP0 is always greater than SRSRP1. At this time, the base station may deliver an instruction to the UE through the higher layer, so as to terminate the antenna in-turn transmitting.

### Specific embodiment 2

An application premise of this scheme is that a higher layer configures that an uplink antenna in-turn transmitting switch is enabled and a closed-loop antenna selection switch is enabled, and information about this is transmitted to a UE. When an uplink antenna is selected, a base station determines the uplink antenna for uplink transmitting of the UE, and the UE performs the base station's determination.

It is assumed here that the UE has two antennas.
1. After receiving a closed-loop antenna transmitting instruction, the UE performs uplink transmitting of an SRS in a manner specified in the 36.213 protocol.
2. The base station receives SRS information transmitted in the uplink by the UE. The UE transmits the SRS information in the uplink at different time points through antenna0 and antenna1. After receiving the SRS information, the base station determines strength of a signal transmitted in the uplink through two antennas within a time window T4.
   Assuming that the signal is received N4 times through antenna0 and is received M4 times through antenna1 within the time window T4, the base station filters the strength of the signal received N4 times through antenna0 to obtain SRSRP0T4, filters the strength of the signal received M4 times through antenna1 to obtain SRSRP1T4, and determines sizes of SRSRP0T4 and SRSRP1T4, where an antenna with a larger value is an antenna with higher signal strength.
   T4 is an integer greater than 0. The base station selects the antenna with the higher signal strength and notifies the UE of the corresponding information about a transmitting antenna of an uplink traffic channel signal/an uplink control channel signal. For example, a group of cover codes may be designed, and different antennas correspond to different cover codes. The base station may notify the UE of information about the uplink transmitting antenna through cover code information added to cyclic redundancy check (CRC) of DCI.
3. If the SRS and the uplink traffic channel signal/the uplink control channel signal use a same uplink transmitting antenna on a same subframe, the SRS and the uplink traffic channel signal/the uplink control channel signal are transmitted on the same sub-frame.
4. If the SRS and the uplink traffic channel signal/the uplink control channel signal use different uplink transmitting antennas on the same subframe, the uplink transmitting antenna of the SRS is used as the uplink transmitting antenna of the uplink traffic channel signal/the uplink control channel signal, or the SRS is transmitted through the uplink transmitting antenna of the uplink traffic channel signal/the uplink control channel signal, or the UE abandons transmitting the SRS on the subframe, or the UE abandons transmitting the uplink traffic channel signal/the uplink control channel signal on the subframe.
   Different implementation scenarios of different options are described below.
   The uplink transmitting of the uplink traffic channel signal or the uplink control channel signal is performed by using the uplink transmitting antenna of the SRS. This method may be used when downlink traffic uses a beamforming (BF) transmission technology.
   The uplink transmitting antenna of the uplink traffic channel signal/the uplink control channel signal is used as the uplink transmitting antenna of the SRS for the uplink transmitting of the SRS. This method may be used when the downlink traffic does not use the beamforming (BF) transmission technology.
   The UE abandons transmitting the SRS on the subframe and only transmits the uplink traffic channel signal or the uplink control channel signal. This method is used when the downlink traffic does not use the beamforming (BF) transmission technology, or when the uplink traffic channel signal is GBR traffic, or when the uplink control channel signal is periodic report information.
   The UE abandons transmitting the uplink traffic channel signal/the uplink control channel signal on the subframe and only transmits the SRS. This method is used when the downlink traffic uses the BF transmission technology, or when the uplink traffic channel signal is NGBR traffic, or when the uplink control channel signal is aperiodically reported.
5. If the signal received by the base station through one antenna is always lower than the signal received through the other antenna within time T5, where T5 is greater than 0, the base station notifies the higher layer of the information. The higher layer reconfigures signaling to notify the UE that the antenna in-turn transmitting is disabled. The in-turn transmitting of the SRS is terminated, and antenna selection and transmitting functions corresponding to the uplink traffic channel signal/the uplink control channel signal are terminated.

An example is provided: the base station acquires the signal strength of antenna0 and antenna1 within the time T5, and continuously compares the strength SRSRP0K and SRSRP1K of the two antennas, where K is an integer greater than or equal to 0. When a probability for SRSRP0 being greater than SRSRP1 is greater than 95%, it may be considered that the signal on antenna0 is always higher than the signal on antenna1. At this time, the base station may deliver an instruction to the UE through the higher layer, so as to terminate the antenna in-turn transmitting.

### Specific embodiment 3

An application premise of this scheme is that a higher layer configures that an uplink antenna in-turn transmitting switch is enabled and an open-loop antenna selection switch is enabled, and information about this is transmitted to a UE. When an uplink antenna is selected, a base station does not control an uplink transmitting antenna of the UE, and the UE determines the uplink transmitting antenna of an SRS and the uplink transmitting antenna of an uplink traffic channel signal/an uplink control channel signal.

It is assumed here that the UE has two antennas.
1. The UE receives a cell-specific reference signal (CRS), information delivered by the base station, and determines RSRP0 and RSRP1 which are strength, RSRP, of a signal received by the UE through antenna0 and antenna1 within a time window T2, where T2 is greater than 0. The UE selects an antenna with higher signal strength for uplink transmitting of the uplink traffic channel signal/the uplink control channel signal.
   Assuming that the UE receives the CRS from the base station N2 times through antenna0 and receives the signal from the base station M2 times through antenna1 within the time window T2, the UE averages the strength of the signal received N2 times through antenna0 to obtain RSRP0T2, averages the strength of the signal received M2 times through antenna1 to obtain RSRP1T2, and determines sizes of RSRP0T2 and RSRP1T2, where an antenna with a larger value is the antenna with the higher signal strength.
2. The UE receives the CRS delivered by the base station, and determines RSRP0 and RSRP1 of the signal received by the UE through antenna0 and antenna1 within a time window T3, where T3 is greater than 0. The UE selects the antenna with the higher signal strength for uplink transmitting of the SRS.
   Assuming that the UE receives the CRS from the base station N3 times through antenna0 and receives the signal from the base station M3 times through antenna1 within the time window T3, the UE averages the strength of the signal received N3 times through antenna0 to obtain RSRP0T3, averages the strength of the signal received M3 times through antenna1 to obtain RSRP1T3, and determines sizes of RSRP0T3 and RSRP1T3, where the antenna with the larger value is the antenna with the higher signal strength.
3. If the SRS and the uplink traffic channel signal/the uplink control channel signal use a same uplink transmitting antenna on a same subframe, the SRS and the uplink traffic channel signal/the uplink control channel signal are transmitted on the same sub-frame.
4. If the SRS and the uplink traffic channel signal/the uplink control channel signal use different uplink transmitting antennas on the same subframe, the uplink transmitting antenna of the uplink traffic channel signal/the uplink control channel signal is the same as the uplink transmitting antenna of the SRS, or the uplink transmitting antenna of the uplink traffic channel signal/the uplink control channel signal is used as the uplink transmitting antenna of the SRS for the uplink transmitting of the SRS, or the UE abandons transmitting the SRS on the subframe, or the UE abandons transmitting the uplink traffic channel signal/the uplink control channel signal on the subframe.
   Different implementation scenarios of different options are described below.
   The uplink transmitting of the uplink traffic channel signal or the uplink control channel signal is performed by using the uplink transmitting antenna of the SRS. This method may be used when downlink traffic uses a beamforming (BF) transmission technology.
   The uplink transmitting antenna of the uplink traffic channel signal/the uplink control channel signal is used as the uplink transmitting antenna of the SRS for the uplink transmitting of the SRS. This method may be used when the downlink traffic does not use the beamforming (BF) transmission technology.
   The UE abandons transmitting the SRS on the subframe and only transmits the uplink traffic channel signal or the uplink control channel signal. This method is used when the downlink traffic does not use the beamforming (BF) transmission technology, or when uplink traffic is GBR traffic, or when the uplink control channel signal is periodic report information.
   The UE abandons transmitting the uplink traffic channel signal/the uplink control channel signal on the subframe and only transmits the SRS. This method is used when the downlink traffic uses the BF transmission technology, or when the uplink traffic channel signal is NGBR traffic, or when the uplink control channel signal is aperiodically reported.
5. If the signal received by the UE through one antenna, antenna0, is lower than the signal received through the other antenna, antenna1, at the probability greater than 95%, the UE terminates downlink reference information measurement for selecting the uplink transmitting antenna of the SRS, the uplink traffic channel signal and the uplink control channel signal. All uplink information is only transmitted through the antenna with the higher received signal strength.
6. After the UE terminates antenna in-turn transmitting, if the received signal strength of the other antenna is greater than the received signal strength of the current uplink transmitting antenna at the probability greater than 70% (the probability may be flexibly set according to practical application scenarios, for example, the probability may also be greater than 75%), the UE starts the downlink reference information measurement for selecting the uplink transmitting antenna of the SRS, the uplink traffic channel signal or the uplink control channel signal, and restarts uplink transmitting antenna selection.

### Specific embodiment 4

An application premise of this scheme is that a higher layer configures that an uplink antenna in-turn transmitting switch is enabled and an open-loop antenna selection switch is enabled, and information about this is transmitted to a UE. When an uplink antenna is selected, a base station does not control an uplink transmitting antenna of the UE, and the UE determines the antenna of an SRS and the antenna of an uplink traffic channel signal/an uplink control channel signal.

It is assumed here that the UE has two antennas.
1. The UE receives traffic information delivered by the base station, and determines strength of a traffic signal received by the UE through antenna0 and antenna1 within a time window T6, where T6 is greater than 0. The UE selects an antenna with higher signal strength for uplink transmitting of an uplink traffic/control signal.
   Assuming that the UE receives the service signal from the base station N6 times through antenna0 and receives the signal from the base station M6 times through antenna1 within the time window T6, the UE averages the strength, signal to interference plus noise ratios (SINRs), of the signal received N6 times through antenna0 to obtain SINROT6, averages the strength, SINR1, of the signal received M6 times to obtain SINR1T6, and determines sizes of SINROT6 and SINR1T6, where an antenna with a larger value is the antenna with the higher signal strength.
2. The UE receives the CRS delivered by the base station, and determines RSRP0 and RSRP1 of the signal received by the UE through antenna0 and antenna1 within a time window T7, where T7 is greater than 0. The UE selects the antenna with the higher signal strength for uplink transmitting of the SRS.
   Assuming that the UE receives the CRS from the base station N7 times through antenna0 and receives the signal from the base station M7 times through antenna1 within the time window T7, the UE averages the strength of the signal received N7 times through antenna0 to obtain RSRP0T7, averages the strength of the signal received M7 times through antenna1 to obtain RSRP1T7, and determines sizes of RSRP0T7 and RSRP1T7, where the antenna with the larger value is the antenna with the higher signal strength.
3. If the SRS and the uplink traffic channel signal/the uplink control channel signal use a same uplink transmitting antenna on a same subframe, the SRS and the uplink traffic channel signal/the uplink control channel signal are transmitted on the same sub-frame.
4. If the SRS and the uplink traffic channel signal/the uplink control channel signal use different uplink transmitting antennas on the same subframe, the uplink transmitting antenna of the uplink traffic channel signal/the uplink control channel signal is the same as the uplink transmitting antenna of the SRS, or the uplink transmitting antenna of the uplink traffic channel signal/the uplink control channel signal is used as the uplink transmitting antenna of the SRS for the uplink transmitting of the SRS, or the UE abandons transmitting the SRS on the subframe, or the UE abandons transmitting the uplink traffic channel signal/the uplink control channel signal on the subframe.
   Different implementation scenarios of different options are described below.
   The uplink transmitting of the uplink traffic channel signal or the uplink control channel signal is performed by using the uplink transmitting antenna of the SRS. This method may be used when downlink traffic uses a beamforming (BF) transmission technology.
   The uplink transmitting antenna of the uplink traffic channel signal/the uplink control channel signal is used as the uplink transmitting antenna of the SRS for the uplink transmitting of the SRS. This method may be used when the downlink traffic does not use the beamforming (BF) transmission technology.
   The UE abandons transmitting the SRS on the subframe and only transmits the uplink traffic channel signal or the uplink control channel signal. This method is used when the downlink traffic does not use the beamforming (BF) transmission technology, or when the uplink traffic channel signal is GBR traffic, or when the uplink control channel signal is periodic report information.
   The UE abandons transmitting the uplink traffic channel signal/the uplink control channel signal on the subframe and only transmits the SRS. This method is used when the downlink traffic uses the BF transmission technology, or when the uplink traffic channel signal is NGBR traffic, or when the uplink control channel signal is aperiodically reported.
5. If the signal received by the UE through one antenna is always lower than the signal received through the other antenna at the probability greater than 95%, the UE terminates downlink reference information measurement for selecting the uplink transmitting antenna of the SRS, the uplink traffic channel signal and the uplink control channel signal. All uplink information is only transmitted through the antenna with the higher received signal strength.
6. After the UE terminates antenna in-turn transmitting, if the received signal strength of the other antenna is greater than the received signal strength of the current uplink transmitting antenna at the probability greater than 70%, the UE starts the downlink reference information measurement for selecting the uplink transmitting antenna of the SRS, the uplink traffic channel signal or the uplink control channel signal, and restarts uplink transmitting antenna selection.

### Specific embodiment 5

An application premise of this scheme is that a higher layer configures that an uplink antenna in-turn transmitting switch is enabled and an open-loop antenna selection switch is enabled, and information about this is transmitted to a UE. When an uplink antenna is selected, a base station does not control an uplink transmitting antenna of the UE, and the UE determines the uplink transmitting antenna of an SRS and the uplink transmitting antenna of an uplink traffic channel signal/an uplink control channel signal.

It is assumed here that the UE has two antennas.
1. The UE receives traffic information delivered by the base station, and determines strength of a traffic signal received by the UE through antenna0 and antenna1 within a time window T8, where T8 is greater than 0. The UE selects an antenna with higher signal strength for uplink transmitting of an uplink traffic/control signal.
   Assuming that the UE receives the service signal from the base station N8 times through antenna0 and receives the signal from the base station M8 times through antenna1 within the time window T8, the UE filters the strength of the signal received N8 times through antenna0 to obtain SINROT8, filters the strength, SINR1, of the signal received M8 times to obtain SINR1T8, and determines sizes of SINROT8 and SINR1T8, where an antenna with a larger value is the antenna with the higher signal strength.
2. The UE receives the traffic information delivered by the base station, and determines SINRO and SINR1 of the signal received by the UE through antenna0 and antenna1 within a time window T9, where T9 is greater than 0. The UE selects the antenna with the higher signal strength for uplink transmitting of the SRS.
   Assuming that the UE receives the service signal from the base station N9 times through antenna0 and receives the signal from the base station M9 times through antenna1 within the time window T9, the UE filters the strength of the signal received N9 times through antenna0 to obtain SINROT9, filters the strength, SINR1, of the signal received M9 times to obtain SINR1T9, and determines sizes of SINROT9 and SINR1T9, where the antenna with the larger value is the antenna with the higher signal strength.
3. If the SRS and the uplink traffic channel signal/the uplink control channel signal use a same uplink transmitting antenna on a same subframe, the SRS and the uplink traffic channel signal/the uplink control channel signal are transmitted on the same sub-frame.
4. If the SRS and the uplink traffic channel signal/the uplink control channel signal use different uplink transmitting antennas on the same subframe, the uplink transmitting antenna of the uplink traffic channel signal/the uplink control channel signal is the same as the uplink transmitting antenna of the SRS, or the uplink transmitting antenna of the uplink traffic channel signal/the uplink control channel signal is used as the uplink transmitting antenna of the SRS for the uplink transmitting of the SRS, or the UE abandons transmitting the SRS on the subframe, or the UE abandons transmitting the uplink traffic channel signal/the uplink control channel signal on the subframe.
   Different implementation scenarios of different options are described below.
   The uplink transmitting of the uplink traffic channel signal or the uplink control channel signal is performed by using the uplink transmitting antenna of the SRS. This method may be used when downlink traffic uses a beamforming (BF) transmission technology.
   The uplink transmitting antenna of the uplink traffic channel signal/the uplink control channel signal is used as the uplink transmitting antenna of the SRS for the uplink transmitting of the SRS. This method may be used when the downlink traffic does not use the beamforming (BF) transmission technology.
   The UE abandons transmitting the SRS on the subframe and only transmits the uplink traffic channel signal or the uplink control channel signal. This method is used when the downlink traffic does not use the beamforming (BF) transmission technology, or when the uplink traffic channel signal is GBR traffic, or when the uplink control channel signal is periodic report information.
   The UE abandons transmitting the uplink traffic channel signal/the uplink control channel signal on the subframe and only transmits the SRS. This method is used when the downlink traffic uses the BF transmission technology, or when the uplink traffic channel signal is NGBR traffic, or when the uplink control channel signal is aperiodically reported.
5. If the signal received by the UE through one antenna is always lower than the signal received through the other antenna at the probability greater than 80% (the probability may also be set to other values), the UE terminates downlink reference information measurement for selecting the uplink transmitting antenna of the SRS, the uplink traffic channel signal and the uplink control channel signal. All uplink information is only transmitted through the antenna with the higher received signal strength.

Specific embodiments 1 and 2 describe closed-loop methods in which the information about the uplink transmitting antenna of the UE is provided by a base station side. Specific embodiments 3, 4 and 5 describe open-loop methods in which the information about the uplink transmitting antenna of the UE is provided by a UE side. Compared with the closed-loop methods, the UE's uplink transmitting antenna selection has greater flexibility. The two schemes separately provide solutions to the problem of inconsistent uplink transmitting antennas of the SRS and the uplink traffic channel signal/the uplink control channel signal on the same subframe, and can both reduce costs for implementing the antenna in-turn transmitting technology of the terminal. Meanwhile, the uplink transmitting antennas on the same subframe are limited to the same antenna, thereby reducing receiving costs of the base station.

The present application is described below in conjunction with the drawings.

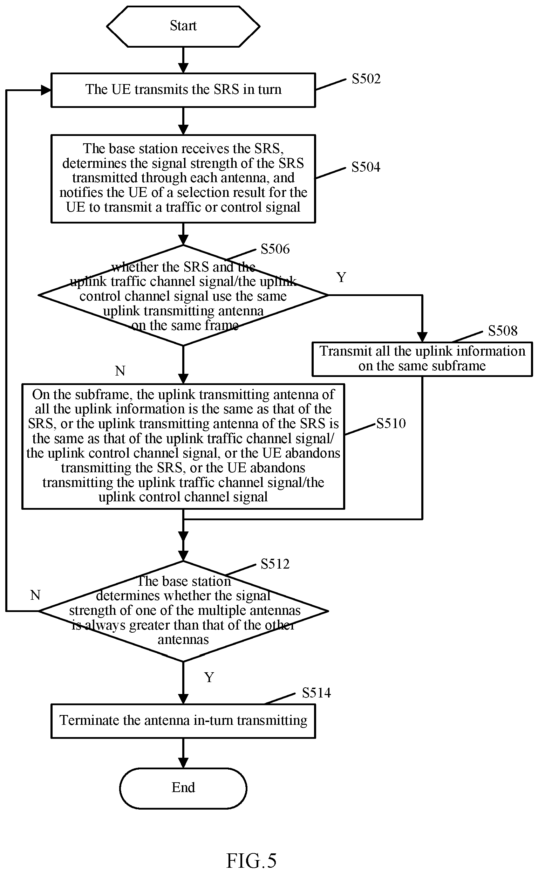

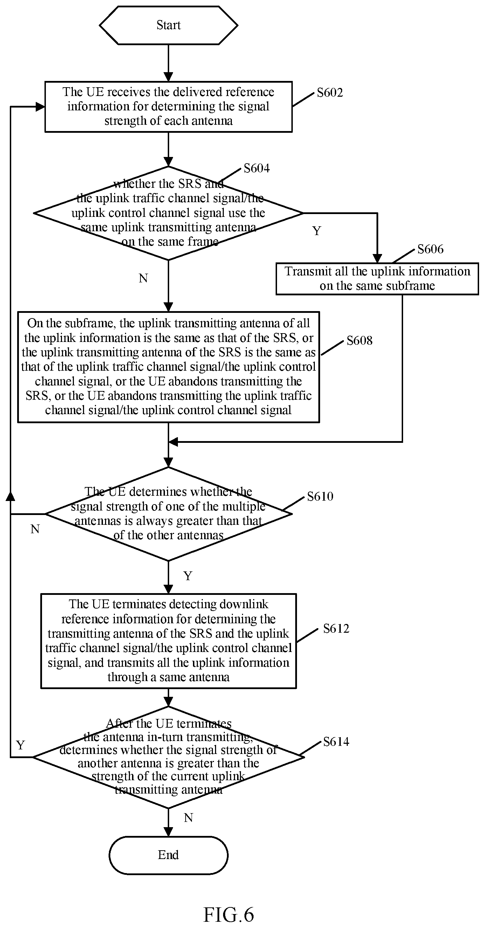

FIG. 4 is a diagram of a hardware environment in the present application. FIG. 5 and FIG. 6 are flowcharts of an antenna in-turn transmitting technology according to embodiments of the present application. FIG. 5 shows a process of a closed-loop antenna in-turn transmitting technology, and FIG. 6 shows a process of an open-loop antenna in-turn transmitting technology. FIG. 5 and FIG. 6 are described below.

As shown in FIG. 5, the process includes steps described below.

In step S502, the UE transmits the SRS in turn through multiple antennas.

In step S504, the base station receives the SRS, determines the signal strength of the SRS transmitted through each antenna, and notifies the UE of a selection result for the UE to transmit a traffic or control signal.

In step S506, it is determined whether the SRS and the uplink traffic/control signal use the same uplink transmitting antenna on the same frame according to a pre-negotiated principle. If the uplink transmitting antenna is consistent, step S508 is performed; otherwise, S510 is performed.

In step S508, all uplink information is transmitted on the same subframe.

In step S510, on the subframe, all the uplink information is transmitted through the same uplink transmitting antenna as the SRS, or the uplink transmitting antenna of the SRS is the same as that of the uplink traffic channel signal/the uplink control channel signal, or the UE abandons transmitting the SRS, or the UE abandons transmitting the uplink traffic channel signal/the uplink control channel signal.

In step S512, the base station determines whether the signal strength of one of the multiple antennas is always greater than that of the other antennas. If yes, step S514 is performed; otherwise, S502 is performed.

In step S514, the antenna in-turn transmitting is terminated.

As shown in FIG. 6, the process includes steps described below.

In step S602, the UE receives reference information delivered by the base station, and determines signal strength of each antenna.

In step S604, it is determined whether the SRS and the uplink traffic/control signal use the same uplink transmitting antenna on the same frame. If the uplink transmitting antenna is consistent, step S606 is performed; otherwise, S608 is performed.

In step S606, all the uplink information is transmitted on the same subframe.

In step S608, all the uplink information on the subframe is transmitted through the same uplink transmitting antenna as the SRS, or the uplink transmitting antenna of the SRS is the same as that of the uplink traffic channel signal/the uplink control channel signal, or the UE abandons transmitting the SRS, or the UE abandons transmitting the uplink traffic channel signal/the uplink control channel signal.

In step S610, the UE determines whether the signal strength of one of the multiple antennas is always greater than that of the other antennas. If yes, step S612 is performed; otherwise, S602 is performed.

In step S612, the UE terminates detecting downlink reference information for determining the transmitting antenna of the SRS and the uplink traffic channel signal/the uplink control channel signal, and transmits all the uplink information through a same antenna.

In step S614, after the UE terminates the antenna in-turn transmitting, the UE determines whether the signal strength of another antenna is greater than the strength of the current uplink transmitting antenna. If yes, step S602 is performed; otherwise, the process ends.

### Embodiment 3

From the description of the above-mentioned embodiments, it will be apparent to those skilled in the art that the method in the embodiments described above may be implemented by software plus a necessary general-purpose hardware platform, or may of course be implemented by hardware. However, in many cases, the former is a preferred implementation manner. Based on this understanding, the solutions provided by the present application substantially, or the part contributing to the existing art, may be embodied in the form of a software product. The computer software product is stored on a storage medium (such as a read-only memory (ROM)/random access memory (RAM), a magnetic disk or an optical disk) and includes several instructions for enabling a terminal device (which may be a mobile phone, a computer, a server, a network device or the like) to execute the methods according to the embodiments of the present application.

### Embodiment 4

An embodiment further provides an apparatus for transmitting uplink information. The apparatus is configured to implement the above-mentioned embodiments and preferred embodiments. What has been described will not be repeated. As used below, the term "module" may be software, hardware or a combination thereof capable of implementing predetermined functions. The apparatus set forth below are preferably implemented by software, but an implementation by hardware or by a combination of software and hardware is also possible and conceived.

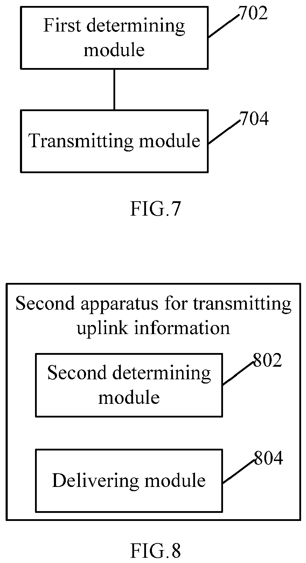

FIG. 7 is a block diagram of a first apparatus for transmitting uplink information according to an embodiment of the present application. The apparatus may be applied to a UE. As shown in FIG. 7, the apparatus includes a first determining module 702 and a transmitting module 704. The apparatus is described below.

The first determining module 702 is configured to determine an uplink transmitting antenna for transmitting first uplink information and second uplink information on a same subframe, where the first uplink information includes an SRS, and the second uplink information includes at least one of: an uplink traffic channel signal or an uplink control channel signal. The transmitting module 704 is connected to the first determining module 702 and is configured to transmit the first uplink information and the second uplink information through the determined uplink transmitting antenna.

In an optional embodiment, the first determining module 702 includes a transmitting unit, a first receiving unit and a first determining unit. The transmitting unit is configured to transmit the first uplink information in turn through multiple antennas to a wireless access system device. The first receiving module is configured to receive a first indication message from the wireless access system device, where the first indication message is used for indicating from the multiple antennas an antenna for transmitting the second uplink information, and the indicated antenna is determined by the wireless access system device according to the first uplink information which is transmitted in turn through the multiple antennas. The first determining unit is configured to determine the antenna indicated by the first indication message to be the uplink transmitting antenna.

In an optional embodiment, the first receiving unit is configured to receive the first indication message notified by the wireless access system device through downlink control information (DCI). That is to say, the wireless access system device may notify the UE of the specific uplink transmitting antenna through the DCI. Of course, the wireless access system device may also notify the UE in other manners.

In an optional embodiment, after the first uplink information is transmitted in turn through the multiple antennas to the wireless access system device, the apparatus is further configured to receive a second indication message from the wireless access system device, and terminate, according to the second indication message, transmitting the first uplink information in turn through the multiple antennas to the wireless access system device. In the embodiment, when determining on the same subframe that a signal received through a certain antenna is always higher than those received through other antennas, the wireless access system device may notify that the UE enters a state of being disabled from multi-antenna in-turn transmitting. Optionally, the wireless access system device may notify the UE through higher-layer configuration information that antenna in-turn transmitting is disabled. The in-turn transmitting of the first uplink information is terminated, and antenna selection and transmitting functions corresponding to the second uplink information are terminated.

In an optional embodiment, the first determining module 702 includes a second receiving unit and a second determining unit. The second receiving unit is configured to receive reference information from the wireless access system device through the multiple antennas. The second determining unit is configured to determine, according to the reference information, the uplink transmitting antenna from the multiple antennas.

In an optional embodiment, the reference information includes at least one of reference signal information or traffic channel information. It is to be noted that the above-mentioned reference information is only several preferred embodiments, and in practical applications, other reference information may also be used.

In an optional embodiment, the second determining unit is configured to select, according to reception qualities of the reference information received through the multiple antennas, the uplink transmitting antenna from the multiple antennas.

In an optional embodiment, after the reference information is received from the wireless access system device through the multiple antennas, the apparatus is further configured to: in response to determining that a reception quality of the reference information received through a first antenna among the multiple antennas is higher than reception qualities of the reference information received through other antennas among the multiple antennas, terminate a process of selecting the uplink transmitting antenna from the multiple antennas, and determine the first antenna to be the uplink transmitting antenna. That is to say, in the embodiment, when a quality of a signal received by the UE through a certain antenna is always higher than those of the signal received by the UE through other antennas, the UE terminates a measurement for antenna selection for the first uplink information and the second uplink information, and all the uplink information is only transmitted through an antenna with the highest received signal strength.

In an optional embodiment, after the process of selecting the uplink transmitting antenna from the multiple antennas is terminated, the apparatus is further configured to: in response to determining that a reception quality of reference information received through a second antenna among the multiple antennas is higher than the reception quality of the reference information received through the first antenna, restart the process of selecting the uplink transmitting antenna from the multiple antennas. In the embodiment, after the UE terminates the antenna in-turn transmitting, the UE will periodically detect or be triggered by an event to detect signal qualities of the antennas, and when detecting that a signal quality of a current selected antenna is inferior to signal qualities of other antennas, the UE starts measuring downlink reference information for the antenna in-turn transmitting and enters an antenna in-turn transmitting mode.

In an optional embodiment, the reception quality includes at least one of a received signal strength, a signal-to-noise ratio or a path loss.

In an optional embodiment, the wireless access system device and the UE may negotiate a transmitting principle for the uplink information, and the uplink information, when being transmitted, may be transmitted according to the negotiated principle. Optionally, the transmitting module 704 is configured to transmit the first uplink information and the second uplink information according to the transmitting principle pre-negotiated with the wireless access system device. The transmitting principle includes one of: in response to determining that the first uplink information and the second uplink information use a same uplink transmitting antenna on the same subframe, transmitting the first uplink information and the second uplink information on the same subframe; or in response to determining that the first uplink information and the second uplink information use different uplink transmitting antennas on the same subframe, performing one of the following transmitting manners: using the uplink transmitting antenna of the second uplink information as the uplink transmitting antenna of the first uplink information, using the uplink transmitting antenna of the first uplink information as the uplink transmitting antenna of the second uplink information, abandoning transmitting the first uplink information on the subframe, or abandoning transmitting the second uplink information on the subframe.

FIG. 8 is a block diagram of a second apparatus for transmitting uplink information according to an embodiment of the present application. The apparatus may be applied to a wireless access system device. As shown in FIG. 8, the apparatus includes a second determining module 802 or a delivering module 804. The apparatus is described below.

The second determining module 802 is configured to determine an uplink transmitting antenna for a user equipment (UE) to transmit first uplink information and second uplink information on a same subframe, and indicate the determined uplink transmitting antenna to the UE. Alternatively, the delivering module 804 is configured to deliver reference information to the UE through multiple antennas, where the reference information is used by the UE to select from the multiple antennas the uplink transmitting antenna for transmitting the first uplink information and the second uplink information. The first uplink information includes an SRS, and the second uplink information includes at least one of: an uplink traffic channel signal or an uplink control channel signal.

In an optional embodiment, the second determining module 802 includes a receiving unit, a third determining unit and a fourth determining unit. The receiving unit is configured to receive the first uplink information transmitted by the UE in turn through the multiple antennas. The third determining unit is configured to determine, according to the received first uplink information, an antenna for the UE to transmit the second uplink information from the multiple antennas. The fourth determining unit is configured to determine the antenna for the UE to transmit the second uplink information to be the uplink transmitting antenna.

In an optional embodiment, the third determining unit is configured to determine from the multiple antennas an antenna, through which the first uplink information transmitted by the UE has highest signal strength, to be the antenna for transmitting the second uplink information. That is to say, the wireless access system device determines strength of a signal transmitted by the UE through different antennas, and selects an antenna with the highest signal strength as the uplink transmitting antenna.

In an optional embodiment, the second determining module 802 may indicate the determined uplink transmitting antenna to the UE by transmitting a first indication message to the UE through downlink control information (DCI). The first indication message is used for indicating the uplink transmitting antenna. That is to say, the wireless access system device may notify the UE of the specific uplink transmitting antenna through the DCI. Of course, the wireless access system device may also notify the UE in other manners.

In an optional embodiment, after the first uplink information transmitted by the UE in turn through the multiple antennas is received, the apparatus is further configured to: in response to determining that a reception quality of the first uplink information received through a third antenna among the multiple antennas is higher than reception qualities of the first uplink information received through other antennas among the multiple antennas, transmit a second indication message to the UE. The second indication message is used for instructing the UE to terminate transmitting the first uplink information in turn through the multiple antennas to the wireless access system device. In the embodiment, when determining on the same subframe that a signal received through a certain antenna is always higher than those received through other antennas, the wireless access system device may notify that the UE enters a state of being disabled from multi-antenna in-turn transmitting. Optionally, the wireless access system device may notify the UE through higher-layer configuration information that antenna in-turn transmitting is disabled. The in-turn transmitting of the first uplink information is terminated, and antenna selection and transmitting functions corresponding to the second uplink information are terminated.

In an optional embodiment, the reference information includes at least one of reference signal information or traffic channel information.

In an optional embodiment, the apparatus is further configured to pre-negotiate a transmitting principle for transmitting the uplink information with the UE. The transmitting principle includes one of: in response to determining that the first uplink information and the second uplink information use a same uplink transmitting antenna on the same subframe, transmitting the first uplink information and the second uplink information on the same subframe; or in response to determining that the first uplink information and the second uplink information use different uplink transmitting antennas on the same subframe, performing one of the following transmitting manners: using the uplink transmitting antenna of the second uplink information as the uplink transmitting antenna of the first uplink information, using the uplink transmitting antenna of the first uplink information as the uplink transmitting antenna of the second uplink information, abandoning transmitting the first uplink information on the subframe, or abandoning transmitting the second uplink information on the subframe.

An embodiment of the present application provides a system for transmitting uplink information. The system includes a user equipment (UE) and a wireless access system device. The UE includes a first processor which is configured to perform the first method for transmitting uplink information according to any one of the embodiments described above. The wireless access system device includes a second processor which is configured to perform the second method for transmitting uplink information according to any one of the embodiments described above.

It is to be noted that the various modules described above may be implemented by software or hardware. Implementation by hardware may, but may not necessarily, be performed in the following manners: the various modules described above are located in the same processor, or the various modules described above are located in different processors in any combination form.

An embodiment of the present application further provides a storage medium. The storage medium includes stored programs, where the programs, when executed, perform the method of any one of the embodiments described above.

Optionally, in the embodiment, the storage medium may include, but is not limited to, a USB flash disk, a read-only memory (ROM), a random access memory (RAM), a mobile hard disk, a magnetic disk, an optical disk or various other media capable of storing program codes.

Apparently, it should be understood by those skilled in the art that each of the above-mentioned modules or steps of the present application may be implemented by a general-purpose computing apparatus, the modules or steps may be concentrated on a single computing apparatus or distributed on a network composed of multiple computing apparatuses, and optionally, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present application is not limited to any specific combination of hardware and software.

The above are only preferred embodiments of the present application and are not intended to limit the present application, and for those skilled in the art, the present application may have various modifications and variations. Any modifications, equivalent substitutions, improvements and the like made within the principle of the present application should fall within the scope of the present application.

### INDUSTRIAL APPLICABILITY

According to the embodiments of the present application, the determined uplink transmitting antenna may be used for transmitting the first uplink information and the second uplink information, ensuring consistency of the uplink transmitting antennas of the above-mentioned information for the same subframe. Therefore, the present application can solve the problem in the related art of increased terminal costs, high wireless link demodulation complexity, and an inability to ensure real-time link processing due to the inconsistent uplink transmitting antennas of the uplink information for the same subframe, and achieve the effects of avoiding the increase of terminal costs, reducing the wireless link demodulation complexity, and ensuring the real-time link processing.

## Claims

1. A method for transmitting uplink information, comprising:
determining an uplink transmitting antenna for transmitting first uplink information and second uplink information on a same subframe, wherein the first uplink information comprises an uplink sounding reference signal, SRS, and the second uplink information comprises at least one of: an uplink traffic channel signal or an uplink control channel signal; and
transmitting the first uplink information and the second uplink information through the determined uplink transmitting antenna.

2. The method of claim 1, wherein the determining the uplink transmitting antenna for transmitting the first uplink information and the second uplink information on the same subframe comprises:
transmitting the first uplink information in turn through multiple antennas to a wireless access system device;
receiving a first indication message from the wireless access system device, wherein the first indication message is used for indicating from the multiple antennas an antenna for transmitting the second uplink information, and the indicated antenna is determined by the wireless access system device according to the first uplink information which is transmitted in turn through the multiple antennas; and
determining the antenna indicated by the first indication message to be the uplink transmitting antenna.

3. The method of claim 2, wherein the receiving the first indication message from the wireless access system device comprises:
receiving the first indication message notified by the wireless access system device through downlink control information, DCI.

4. The method of claim 2, after transmitting the first uplink information in turn through the multiple antennas to the wireless access system device, further comprising:
receiving a second indication message from the wireless access system device; and
terminating, according to the second indication message, transmitting the first uplink information in turn through the multiple antennas to the wireless access system device.

5. The method of claim 1, wherein the determining the uplink transmitting antenna for transmitting the first uplink information and the second uplink information on the same subframe comprises:
receiving reference information from a wireless access system device through multiple antennas; and
determining, according to the reference information, the uplink transmitting antenna from the multiple antennas.

6. The method of claim 5, wherein the reference information comprises at least one of:
reference signal information or traffic channel information.

7. The method of claim 5, wherein the determining, according to the reference information, the uplink transmitting antenna from the multiple antennas comprises:
selecting, according to reception qualities of the reference information received through the multiple antennas, the uplink transmitting antenna from the multiple antennas.

8. The method of claim 7, after receiving the reference information from the wireless access system device through the multiple antennas, further comprising:
in response to determining that a reception quality of the reference information received through a first antenna among the multiple antennas is higher than reception qualities of the reference information received through other antennas among the multiple antennas, terminating a process of selecting the uplink transmitting antenna from the multiple antennas, and determining the first antenna to be the uplink transmitting antenna.

9. The method of claim 8, after terminating the process of selecting the uplink transmitting antenna from the multiple antennas, further comprising:
in response to determining that a reception quality of the reference information received through a second antenna among the multiple antennas is higher than the reception quality of the reference information received through the first antenna among the multiple antennas, restarting the process of selecting the uplink transmitting antenna from the multiple antennas.

10. The method of any one of claims 7 to 9, wherein the reception quality comprises at least one of:
a received signal strength, a signal-to-noise ratio or a path loss.

11. The method of claim 1, wherein the transmitting the first uplink information and the second uplink information through the determined uplink transmitting antenna comprises:
transmitting the first uplink information and the second uplink information according to a transmitting principle pre-negotiated with a wireless access system device, where the transmitting principle comprises one of:
in response to determining that the first uplink information and the second uplink information use a same uplink transmitting antenna on the same subframe, transmitting the first uplink information and the second uplink information on the same subframe; or
in response to determining that the first uplink information and the second uplink information use different uplink transmitting antennas on the same subframe, performing one of following transmitting manners: using the uplink transmitting antenna of the second uplink information as the uplink transmitting antenna of the first uplink information, using the uplink transmitting antenna of the first uplink information as the uplink transmitting antenna of the second uplink information, abandoning transmitting the first uplink information on the subframe, or abandoning transmitting the second uplink information on the subframe.

12. A method for transmitting uplink information, comprising:
determining an uplink transmitting antenna for a user equipment, UE, to transmit first uplink information and second uplink information on a same subframe, and indicating the determined uplink transmitting antenna to the UE; or
delivering reference information to the UE through multiple antennas, wherein the reference information is used by the UE to select from the multiple antennas the uplink transmitting antenna for transmitting the first uplink information and the second uplink information;
wherein the first uplink information comprises an uplink sounding reference signal, SRS, and the second uplink information comprises at least one of: an uplink traffic channel signal or an uplink control channel signal.

13. The method of claim 12, wherein the determining the uplink transmitting antenna for the UE to transmit the first uplink information and the second uplink information on the same subframe comprises:
receiving the first uplink information transmitted by the UE in turn through the multiple antennas;
determining, according to the received first uplink information, an antenna for the UE to transmit the second uplink information from the multiple antennas; and
determining the antenna for the UE to transmit the second uplink information to be the uplink transmitting antenna.

14. The method of claim 13, wherein the determining, according to the received first uplink information, the antenna for the UE to transmit the second uplink information from the multiple antennas comprises:
determining from the multiple antennas an antenna, through which the first uplink information transmitted by the UE has a highest signal strength, to be the antenna for transmitting the second uplink information.

15. The method of claim 13, wherein the indicating the determined uplink transmitting antenna to the UE comprises:
transmitting a first indication message to the UE through downlink control information, DCI, wherein the first indication message is used for indicating the uplink transmitting antenna.

16. The method of claim 13, after receiving the first uplink information transmitted by the UE in turn through the multiple antennas, further comprising:
in response to determining that a reception quality of the first uplink information received through a third antenna among the multiple antennas is higher than reception qualities of the first uplink information received through other antennas among the multiple antennas, transmitting a second indication message to the UE, wherein the second indication message is used for instructing the UE to terminate transmitting the first uplink information in turn through the multiple antennas to a wireless access system device.

17. The method of claim 12, wherein the reference information comprises at least one of:
reference signal information or traffic channel information.

18. The method of claim 12, further comprising:
pre-negotiating a transmitting principle for transmitting the uplink information with the UE, wherein the transmitting principle comprises one of:
in response to determining that the first uplink information and the second uplink information use a same uplink transmitting antenna on the same subframe, transmitting the first uplink information and the second uplink information on the same subframe; or
in response to determining that the first uplink information and the second uplink information use different uplink transmitting antennas on the same subframe, performing one of following transmitting manners: using the uplink transmitting antenna of the second uplink information as the uplink transmitting antenna of the first uplink information, using the uplink transmitting antenna of the first uplink information as the uplink transmitting antenna of the second uplink information, abandoning transmitting the first uplink information on the subframe, or abandoning transmitting the second uplink information on the subframe.

19. An apparatus for transmitting uplink information, comprising:
a first determining module, which is configured to determine an uplink transmitting antenna for transmitting first uplink information and second uplink information on a same subframe, wherein the first uplink information comprises an uplink sounding reference signal, SRS, and the second uplink information comprises at least one of: an uplink traffic channel signal or an uplink control channel signal; and
a transmitting module, which is configured to transmit the first uplink information and the second uplink information through the determined uplink transmitting antenna.

20. The apparatus of claim 19, wherein the first determining module comprises:
a transmitting unit, which is configured to transmit the first uplink information in turn through multiple antennas to a wireless access system device;
a first receiving unit, which is configured to receive a first indication message from the wireless access system device, wherein the first indication message is used for indicating from the multiple antennas an antenna for transmitting the second uplink information, and the indicated antenna is determined by the wireless access system device according to the first uplink information which is transmitted in turn through the multiple antennas; and
a first determining unit, which is configured to determine the antenna indicated by the first indication message to be the uplink transmitting antenna.

21. An apparatus for transmitting uplink information, comprising:
a second determining module, which is configured to determine an uplink transmitting antenna for a user equipment, UE, to transmit first uplink information and second uplink information on a same subframe, and indicate the determined uplink transmitting antenna to the UE; or
a delivering module, which is configured to deliver reference information to the UE through multiple antennas, wherein the reference information is used by the UE to select from the multiple antennas the uplink transmitting antenna for transmitting the first uplink information and the second uplink information;
wherein the first uplink information comprises an uplink sounding reference signal, SRS, and the second uplink information comprises at least one of: an uplink traffic channel signal or an uplink control channel signal.

22. The apparatus of claim 21, wherein the second determining module comprises:
a receiving unit, which is configured to receive the first uplink information transmitted by the UE in turn through the multiple antennas;
a third determining unit, which is configured to determine, according to the received first uplink information, an antenna for the UE to transmit the second uplink information from the multiple antennas; and
a fourth determining unit, which is configured to determine the antenna for the UE to transmit the second uplink information to be the uplink transmitting antenna.

23. A system for transmitting uplink information, comprising a user equipment, UE, and a wireless access system device; wherein
the UE comprises a first processor which is configured to perform the method of any one of claims 1 to 11; and
the wireless access system device comprises a second processor which is configured to perform the method of any one of claims 12 to 18.

24. A storage medium storing programs thereon, wherein the programs, when being executed, perform the method of any one of claims 1 to 18.
